Europäisches Patentamt

(19) European Patent Office

Office européen des brevets

(11) Numéro de publication: **0 226 493**
**B1**

(12) **FASCICULE DE BREVET EUROPEEN**

(45) Date de publication du fascicule du brevet:
**11.04.90**

(21) Numéro de dépôt: **86402500.2**

(22) Date de dépôt: **10.11.86**

(51) Int. Cl.⁴: **E01C 7/18,** E01C 3/00,
C08L 95/00, E02B 3/12

(54) Sable fillérisé activé, son procédé de préparation et son application à la fabrication d'enrobés à chaud.

(30) Priorité: **12.11.85 FR 8516693**

(43) Date de publication de la demande:
**24.06.87 Bulletin 87/26**

(45) Mention de la délivrance du brevet:
**11.04.90 Bulletin 90/15**

(84) Etats contractants désignés:
**AT BE CH DE ES FR GB GR IT LI LU NL SE**

(56) Documents cités:
**DE-A- 2 830 795**

**BITUMEN, vol. 35 no. 4, 1973, page 112, Hambourg, DE;
A.A. TIMOFEJEW: "Wiederverwendung von
Asphaltbeton"**

(73) Titulaire: **ENTREPRISE JEAN LEFEBVRE, 11, Bld
Jean-Mermoz B.P. 139, F-92202 Neuilly-sur-Seine
Cédex(FR)**

(72) Inventeur: **Vivier, Maurice, 11, rue Peclet,
F-75015 Paris(FR)**

(74) Mandataire: **Ahner, Francis et al, CABINET
REGIMBEAU, 26, avenue Kléber, F-75116 Paris(FR)**

## Description

La présente invention concerne un sable fillérisé activé, sa préparation à partir d'enrobés de récupération, ainsi que son application à la réalisation d'enrobés à chaud destinés aux couches de base ou aux couches de roulement de chaussées diverses, telles que des routes, pistes aéroportuaires, parking et analogues, ou encore aux revêtements de berges de canaux, digues, réservoirs ou analogues.

Selon la technique habituellement utilisée, les enrobés sont préparés en mélangeant des granulats concassés de roches massives ou alluvionnaires, par exemple de roches éruptives, telles que les porphyres, avec des liants hydrocarbonés tels que le bitume.

Parmi les divers liants hydrocarbonés, le bitume, malgré son prix de revient élevé lié à celui du pétrole dont il est issu, continue à être abondamment utilisé en raison de ses propriétés spécifiques.

Les teneurs en bitume habituellement utilisées correspondent à des modules de richesse compris dans la gamme :
. 2,5 à 3 pour les couches de base en grave bitume
. 3,5 à 4 pour les couches de roulement en béton bitumineux
. 4,5 à 5 pour les revêtements de berges en béton bitumineux.

On rapellera brièvement ci-dessous la relation qui lie la teneur en liant et le module de richesse :
teneur en liant = $K^5 . \sqrt{\Sigma} . \alpha$
dans laquelle :
$\Sigma$ = surface spécifique conventionnelle des granulats
$\Sigma = 0,25\ G + 2,3\ S + 12\ s + 135\ f$, en $m^2/kg$
avec les proportions pondérales
G des éléments supérieurs à 6 mm
S des éléments compris entre 6 et 0,315 mm
s des éléments compris entre 0,315 et 0,08 mm
f des éléments inférieurs à 0,08 mm
K = module le richesse corrigé
$\alpha$ = coefficient correcteur destiné à tenir compte de la masse volumique des granulats, $\alpha$ étant égal à 2,65 divisé par la masse volumique des granulats.

On a déjà tenté de récupérer le bitume d'enrobés anciens par recyclage, ce qui présente l'inconvénient d'obtenir un liant vieilli et de reproduire les éventuels défauts du squelette minéral de l'enrobé ancien.

L'état de la technique antérieure peut en particulier être illustré par DE-A- 28 30 795 relatif à un procédé de préparation de matériaux bitumineux de récupération. La caractéristique de ce procédé est limitée à l'opération physique de mélange de matériaux bitumineux de récupération avec des matériaux neufs. Conformément à ce procédé, on réalise un mélange dans au moins deux malaxeurs montés en série, de manière à mieux maîtriser les problèmes de température en relation avec le phénomène d'enrobage. Ce procédé vise en particulier à éviter la calcination du bitume présent dans les matériaux de récupération et il permet une augmentation de la teneur en matériaux de récupération recyclés, mais au prix d'une durée de malaxage doublée. En outre, les matériaux de récupération fraîchement fraisés présentent l'inconvénient de se reprendre très rapidement en masse lors du stockage, ce qui oblige l'addition de roches broyées neutralisant cet effet de reprise en masse. Dans la pratique, cette solution n'est guère satisfaisante, car elle implique l'utilisation de quantités supplémentaires de bitume pour enrober la roche broyée additionnée au fraisat. Cet inconvénient majeur de reprise en masse a précisément pu être écarté grâce à la présente invention, et ceci sans le moindre ajout de roches broyées.

La présente invention a précisément eu pour but de pallier ces inconvénients en mettant au point un sable fillérisé activé obtenu à partir d'enrobés de récupération soumis à un traitement particulier. La présente invention a ainsi permis de fabriquer des enrobés de qualité, tout en réalisant des économies substantielles de bitume et en procurant un certain nombre d'autres avantages qui seront mentionnés ci-après.

Une première caractéristique de la présente invention vise le sable fillérisé se présentant sous la forme de particules entièrement enrobées d'un film de liant hydrocarboné, en particulier de bitume, conférant audit sable un caractère hydrophobe, lesdites particules étant obtenues à partir d'enrobés de récupération, par broyage jusqu'à obtention d'une proportion de 15 à 45% en poids, de préférence de 20 à 35% en poids, de particules de dimension inférieure à environ 80 μm.

Un tel sable fillérisé activé présente avantageusement une teneur en liant hydrocarboné, en particulier en bitume, qui est comprise entre 3,5 et 12% en poids.

La présente invention concerne également un procédé de préparation de sable fillérisé activé, caractérisé en ce qu'il consiste à broyer des enrobés de récupération, éventuellement réduits préalablement en éléments de dimensions maximales d'environ 30 mm par fraisage ou par émiettage de blocs. Un tel broyage des enrobés préalablement réduits est avantageusement réalisé dans un broyeur à barres ou un broyeur giratoire, éventuellement en présence d'un agent de mouture.

Enfin, la présente invention englobe également l'application d'un tel sable fillérisé activé à la fabrication d'enrobés à chaud pour travaux routiers ou autres revêtements analogues. Dans le cadre d'une telle application, le sable fillérisé activé est ajouté à un mélange de granulats et de bitume d'apport pur, spécial ou modifié, et éventuellement d'huile régénérante, le sable étant présent à raison d'environ 15 à 40 % en poids, le bitume d'apport en raison d'environ 2 à 3,5 % en poids, ces pourcentages en poids étant exprimés par rapport au poids de l'ensemble des granulats.

Le sable fillérisé activé, objet de la présente invention, est obtenu à partir d'enrobés de récupération initialement fabriqués à partir de granulats concassés de roches, liés entre eux au moyen d'un liant hydrocarboné, généralement du bitume ou encore du goudron.

A titre d'exemple de tels granulats, on mentionnera les roches massives ou alluvionnaires, par exemple les roches éruptives, telles que les porphyres, en particulier des roches éruptives microlitiques, notamment la rhyolite, la labradorite, l'esterellite et l'ambérite, ou encore des roches éruptives holocristallines, notamment la diorite, par exemple extraite des carrières de La Noubleau (Deux-Sèvres).

Des essais en vraie grandeur ont montré qu'on pouvait obtenir aisément un tel sable fillérisé activé en faisant appel à des broyeurs à barres ou à des broyeurs giratoires, par exemple du type GYRADISC®.

Un agent de mouture peut, le cas échéant, être ajouté au moment du broyage. Il convient toutefois d'observer que le sable fillérisé activé ainsi obtenu présente un caractère hydrophobe, qui soit obtenu par broyage en présence ou en l'absence d'un agent de mouture.

En effet, les particules de sable fillérisé activé se trouvent recouvertes au cours de l'opération de broyage par une très mince couche de bitume. Il a en effet été constaté que, lors du processus de broyage, toute surface minérale fraîchement formée présente à son apparition, une énergie superficielle élevée se manifestant en particulier par une grande activité électrochimique. Cette activité électrochimique est très favorable à la fixation des particules bitumineuses, elles-mêmes libérées au cours de l'opération de broyage.

On a ainsi pu obtenir dans la pratique un sable fillérisé activé de granulométrie 0/1 - 0/2 ou 0/3 mm comportant au moins environ 20 % de particules inférieures à environ 80 $\mu$m.

Selon un mode de réalisation particulièrement avantageux, le sable fillérisé activé, conforme à la présente invention, présente sensiblement le profil granulométrique suivant :

| Dimension des mailles du tamis en millimètres | Proportion des éléments du sable fillérisé activé passant au tamis correspondant, en % |
|---|---|
| 6,3 | 100 |
| 4 | 80 à 100 |
| 2 | 60 à 100 |
| 1 | 45 à 90 |
| 0,63 | 35 à 85 |
| 0,315 | 25 à 65 |
| 0,2 | 20 à 55 |
| 0,080 | 15 à 45 |

En ce qui concerne la teneur en liant du sable fillérisé activé selon l'invention, il convient d'observer qu'elle est bien sûr directement liée à celle de l'enrobé dont il est issu. En conséquence, dans la pratique, cette teneur sera avantageusement comprise entre 3,5 et 12 %, exprimée en pourcentage pondéral de bitume par rapport à l'ensemble des granulats.

La granulométrie particulière évoquée précédemment, conjuguée au caractère hydrophobe des particules de sable fillérisé activé, permet d'éviter toute précaution lors du stockage du sable qui peut être conservé à l'air libre, repris et dosé comme un granulat ordinaire et non comme un filler.

La faible teneur en eau du sable fillérisé activé selon l'invention, permet une manipulation très aisée de ce dernier, même par convoyeur du type à vis d'Archimède.

Au surplus, l'utilisation d'un tel sable fillérisé activé, à la place de sable fillérisé ordinaire hydrophile (sable obtenu par broyage de granulats non enrobés de liant hydrocarboné) conduit à une importante économie de fioul habituellement indispensable lors du séchage, puis du chauffage des composants minéraux des matériaux enrobés.

La faible teneur en eau du sable fillérisé activé selon l'invention est bien sûr en liaison étroite avec son caractère hydrophobe.

Des mesures de teneur en eau faites sur le sable fillérisé activé stocké pendant 18 mois et non protégé des intempéries (échantillon de 50 tonnes - hauteur du tas 2 m) montrent que la teneur en eau a très peu augmenté depuis son élaboration. Elle reste en effet inférieure à 2,5 % et ceci malgré une hauteur totale de pluie tombée de 1,3 m pendant cette période de stockage.

On a ainsi pu mesurer une teneur en eau de 1,4 % en poids immédiatement après la fabrication du sable fillérisé activé ; et cette teneur est passée à 3 % en poids après 18 mois de stockage.

On observera que l'augmentation de la teneur en eau est due à la présence de particules de plus grande dimension relativement à la fraction fine inférieure à 80 $\mu$m. Ces particules plus grandes, qui sont constituées par des éléments compris entre 0,3 et 0,2 mm, forment un réseau de cheminement préférentiel par lequel l'eau a pu s'infiltrer, mais ceci en très faible quantité.

A titre de comparaison, un sable broyé de même granulométrie que le sable fillérisé activé selon l'invention, pendant une durée de stockage nettement plus courte, aurait atteint une teneur en eau voisine de la saturation, c'est-à-dire de l'ordre de 12 % en poids.

Le caractère hydrophobe du sable fillérisé activé selon l'invention a été mis en évidence par la mesure de la remontée capillaire, directement liée à l'étalement d'eau sur les éléments constitutifs d'un matériau.

On a comparé la remontée capillaire (mesurée par le produit Kh) d'un sable fillérisé activé et d'un sable broyé de roche massive reconstitué selon la même granulométrie, où K = coefficient de perméabilité (cm/seconde) et h = force de traction exercée par le matériau sur l'eau (cm d'eau).

Les résultats obtenus ont été consignés dans le tableau suivant :

TABLEAU I
Mesure du caractère hydrophobe à court terme

| MATERIAU (granulométrie identique) | COMPACITE DU MATERIAU en % | PRODUIT Kh en $cm^2$/heure |
|---|---|---|
| Sable broyé 0/2 mm à 20% éléments inférieurs à 0,08 mm – Diorite Carrière LA NOUBLEAU | 70,6 | 63,10 |
| Sable fillérisé activé 0/2 mm à 20% éléments inférieurs à 0,08 mm Teneur en bitume résiduel 5,75% | 70,6 | 0,18 |

Il a également paru intéressant de déterminer l'épaisseur moyenne du film de liant hydrocarboné déposé sur les grains fins du sable fillérisé activé selon l'invention, au cours de l'opération de broyage. L'épaisseur a été déterminée par la méthode de l'A.E.M.A. (Asphalte Emulsion Manufacture Association - Washington U.S.A. ).

Cette méthode de détermination repose sur l'équation de calcul suivant :

$$e = \frac{\% \ bitume}{SS \times \frac{2,65}{d_a} \times 100 \times d_b \times 0,02047}$$

e = épaisseur moyenne du film de bitume en microns
% bitume exprimé par rapport au poids de granulats
$d_a$ = densité apparente du granulat
$d_b$ = densité du bitume rapportée à l'eau
0,02047 = facteur correctif de transformation de la surface spécifique des unités USA en unité internationale (square feet par pound en $m^2$/kg) et passage du m au micron
SS = Surface spécifique en square feet par pound. SS est la somme des surfaces spécifiques élémentaires définies comme le produit du pourcentage d'éléments inférieurs à une dimension donnée multipliée par le coefficient de surface spécifique correspondant $SS = \Sigma (SS_i \times C_{SSi})$

| TAMIS n° | Dimens. | Coeff. surface spécifique |
|---|---|---|
| 3/8 in | 9,5 mm | 0,02 |
| 4 | 4,75 mm | 0,02 |
| 8 | 2,36 mm | 0,04 |
| 16 | 1,18 mm | 0,08 |
| 30 | 600 µm | 0,14 |
| 50 | 300 µm | 0,30 |
| 100 | 150 µm | 0,60 |
| 100 | 75 µm | 1,60 |

On a ainsi pu déterminer que pour un sable fillérisé activé de granulométrie 0/2 mm, comportant 5,75 % de bitume et 23 % d'éléments inférieurs à 80 µm, l'épaisseur moyenne du film de bitume était d'environ 3,5 µm.

A titre de comparaison, on a calculé l'épaisseur moyenne de bitume entourant les grains de la fraction granulométrique 0/2 mm de même profil granulométrique provenant du criblage à 2 mm d'un enrobé témoin de module de richesse 3,5 ; on a ainsi trouvé une épaisseur bien supérieure, à savoir 10,7 µm.

Conformément à la présente invention, le sable fillérisé activé est destiné à la fabrication d'enrobés à chaud pour divers travaux routiers ou autres revêtements analogues.

L'emploi de sable fillérisé activé ne nécessite que des aménagements mineurs des centrales d'enrobage, que l'on trouve d'ailleurs déjà sur diverses centrales les comportant à d'autres fins. En effet, les recherches expérimentales faites au laboratoire, tout comme les essais en vraie grandeurs (poste discontinu), ont montré que le simple mélange de granulats vierges, de sable fillérisé activé et de bitume d'apport conduisait à des enrobés présentant d'excellentes performances. Selon l'invention, on a également pu obtenir des enrobés similaires préparés par double enrobage (granulat + bitume + sable fillérisé activé), dont les essais ne révèlent cependant pas d'avantages particuliers.

Le sable fillérisé activé peut être introduit:
* au pied de l'élévateur à chaud dans le cas de postes discontinu ou continu au dosage de 15 à 20 % en poids,
* par l'anneau de recyclage dans le cas de tambour sécheur enrobeur, à un dosage de 15 à 40 % en poids.

Ce dosage du sable fillérisé activé dans le mélange peut être réalisé au moyen d'une trémie doseuse classique.

Du point de vue de leurs températures d'enrobage et de mise en place, les enrobés à faible teneur en bitume comportant un sable fillérisé activé ne diffèrent pas des enrobés recyclés conventionnellement ou des enrobés traditionnels. En conséquence, et ceci a pu être vérifié par des essais en vraie grandeur, leur mise en œuvre peut se faire selon les techniques connues; les moyens de compactage, tels que compacteurs à pneus ou vibrants, sont adaptés à l'épaisseur de la couche et permettent d'atteindre des compacités élevées.

On notera également qu'en variante, l'emploi de sable fillérisé activé est compatible, non seulement avec l'apport de bitumes purs spéciaux ou modifiés, mais également avec l'apport d'un mélange de bitume et d'huile régénérante ayant des caractéristiques telles que l'on puisse améliorer les qualités élastiques du bitume de l'enrobé vieilli.

Les enrobés ainsi réalisés ont donné pleine satisfaction dans la pratique. On a regroupé dans le tableau ci-après un certain nombre de résultats d'expérimentations conduites comparativement sur différents enrobés conformes à l'invention et sur un enrobé témoin.

TABLEAU II

| MATERIAUX CONSTITUTIFS DE L'ENROBE | | ENROBE TEMOIN | ENROBE COMPORTANT | | |
|---|---|---|---|---|---|
| | | | 15% SFA* | 15% SFA* | 38% SFA* |
| | | COMPOSITION PONDERALE EN % MATERIAUX SECS | | | |
| – Granulats concassés 2/14 mm porphyre (**) | | 63 | 63 | 63 | 63 |
| – Granulats concassés 0/2 mm porphyre (**) | | 35 | 20 | 20 | – |
| – SFA* 0/2 mm à 22% d'éléments inférieurs à 80 microns et à 5,75% de bitume | | – | 15 | 15 | 38 |
| – Filler calcaire | | 2 | 2 | 2 | – |
| – Bitume ajouté pour l'enrobage | % | 5,5 | 3,5 | 3,5 | 2,2 |
| | grade | 60/70 | 80/100 | 180/220 | 80/100 |
| – Bitume total après enrobage % | | 5,5 | 4,35 | 4,35 | 4,35 |
| MODULE DE RICHESSE DE L'ENROBE | | 3,5 | 2,75 | 2,75 | 2,75 |

TABLEAU II (Suite 1)

| CARACTERISTIQUES MESUREES | NORME DE L'ESSAI | UNITE DE MESURE | VALEURS DES CARACTERISTIQUES MESUREES | | | |
|---|---|---|---|---|---|---|
| **1. ESSAI MARSHALL** | A S T M D. 1559 | | | | | |
| – Densité apparente de l'enrobé | | $T/m^3$ | 2,49 | 2,46 | 2,53 | 2,44 |
| – Compacité | | % | 95,8 | 93 | 96 | 93,4 |
| – Stabilité à 60°C | | da N | 790 | 870 | 770 | 990 |
| – Fluage | | mm | 3,4 | 3,3 | 4 | 2,9 |
| **2. ESSAI L.C.P.C.** | Mode opératoire Laboratoire Central des Ponts et Chaussées | | | | | |
| – Densité apparente de l'enrobé | | $T/m^3$ | 2,45 | 2,44 | 2,51 | 2,44 |
| – Compacité | | % | 94,2 | 92,5 | 95,2 | 93,7 |
| – Résistance à la compression simple à 8 jours, à l'air, à 18°C (R) | | MPa | 8,2 | 8,1 | 6,6 | 9,7 |
| – Résistance à la compression simple à 8 jours, après immersion dans l'eau à 18°C (R') | | MPa | 7,4 | 7,3 | 5,9 | 8,6 |
| – Rapport $\frac{R'}{R}$ | | – | 0,9 | 0,9 | 0,9 | 0,9 |
| **3. ESSAI DE TRACTION PAR FENDAGE BRESILIEN** | Mode opératoire Laboratoire Central des Ponts et Chaussées | | | | | |
| – Densité apparente de l'enrobé | | $T/m^3$ | 2,45 | 2,44 | 2,51 | 2,44 |
| – Compacité | | % | 94,2 | 92,5 | 95,2 | 93,7 |
| – Résistance à la traction à 8 jours, à l'air à 18°C | | MPa | 2,15 | 2 | 1,7 | 2,5 |
| **4. ESSAI D'ORNIERAGE L.C.P.C.** | Mode opératoire Laboratoire Central des Ponts et Chaussées | | | | | |
| Effort appliqué sur la roue 6,5 T. Pneumatique gonflé à 6 bars – Température 60°C – 1 cycle/S | | | | | | |
| – Compacité de l'enrobé | | % | 94,2 | 92,5 | | |
| – Profondeur d'ornière à 30.000 cycles | | mm | 8,5 | 5,5 | | |
| **5. ESSAI DE FATIGUE EN TRACTION COMPRESSION A AMPLITUDE DE DEFORMATION CONSTANTE** | non normalisé | | | | | |
| Eprouvette cylindrique Ø 10 cm – Ht 15 cm | | | | | | |
| – Compacité de l'enrobé | | % | 94,2 | 92,7 | | |
| – Allongement relativ à 106 cycles à 10°C pour une fréquence de 25 H² | | – | $0,57 \times 10^{-4}$ | $0,45 \times 10^{-4}$ | | |

SFA* = Sable fillérisé activé selon l'invention

porphyre (**) = CARRIERES DE LA NOUBLEAU (Deux-Sèvres) – Poids spécifique 2,835 $T/m^3$ – Diorite

L'analyse de ces différents résultats montrent que les performances des enrobés selon la présente invention sont tout à fait comparables à celles de l'enrobé traditionnel témoin. On rappellera une dernière fois que le sable fillérisé activé selon l'invention se trouve pré-enrobé par un film de bitume. Lorsque l'on utilise ce sable fillérisé activé pour fabriquer du béton bitumineux, il est ainsi possible de réduire considérablement la quantité de bitume d'apport. En effet, les grains fins du sable fillérisé activé selon l'invention ne nécessite plus d'être mouillé par d'épais films de bitume, comme c'était le cas pour l'enrobage des grains de même finesse d'un sable fillérisé traditionnel. Les tableaux III et IV figurant ci-après illustrent l'importance de l'économie de bitume que permet de réaliser l'utilisation du sable fillérisé selon l'invention.

On notera enfin que le module de richesse de l'enrobé peut être abaissé de :

2,5-3 à 1,5-2 pour les enrobés de couche de base

3,4-4,5 à 2,5-3 pour les enrobés de roulement

4,5-5 à 3,5-4 pour les enrobés de revêtement de berges

et ceci, sans réduire les caractéristiques rhéologiques à court terme, ni les caractéristiques mécaniques à long terme des enrobés.

Enfin, il convient de rappeler que la sélection particulière de la granulométrie du broyat d'enrobés de récupération permet de façon surprenante d'éviter tout phénomène de reprise en masse lors du stockage.

TABLEAU III

ECONOMIE DE BITUME PROCUREE PAR LE SFA*

| COMPARAISON AVEC | UNITES | ECONOMIE DE BITUME PROCUREE PAR | | |
|---|---|---|---|---|
| | | 15% SFA* | ·20% SFA* | 38% SFA* |
| BB* TEMOIN | KG/T de BB* | 18,2 | 19,0 | 30,9 |
| | % relatif | 35 | 36,6 | 59,2 |
| BB* RECYCLE CONVENTIONNELLE- MENT AVEC LE MEME POUR | KG/T de BB* | 10,1 | 10,1 | 10,2 |
| | % relatif | 22,9 | 24,5 | 32,5 |

SFA* = Sable fillérisé activé

BB* = Béton bitumineux

TABLEAU IV

CONSOMMATIONS DE BITUME A LA FABRICATION

| TYPES DE BB* | | QUANTITE DE BITUME AJOUTE Kg/T de BB* | MODULE RICHESSE FINAL DU BB* |
|---|---|---|---|
| BB* TEMOIN | | 52,13 | 3,5 (K) |
| BB* RECYCLE CONVEN- TIONNELLEMENT AVEC DU FRAISAT | 15% | 44 | 3,5 |
| | 20% | 41,20 | 3,5 |
| | 38% | 31,40 | 3,5 |
| BB* RECYCLE AU SFA* | 15% | 33,90 | 2,8 (0,8 K) |
| | 20% | 31,10 | 2,8 |
| | 38% | 21,20 | 2,8 |

SFA* = Sable fillérisé activé

BB* = béton bitumineux

## Revendications

1/ Sable fillérisé activé pour enrobés à chaud, caractérisé en ce qu'il se présente sous la forme de particules entièrement enrobées d'un film de liant hydrocarboné, en particulier de bitume, conférant audit sable un caractère hydrophobe, lesdites particules étant obtenues à partir d'enrobés de récupération, par broyage jusqu'à obtention d'une proportion de 15 à 45% en poids, de préférence de 20 à 35% en poids, de particules inférieures à environ 80 µm.

2/ Sable fillérisé activé selon la revendication 1, caractérisé en ce que sa teneur en liant hydrocarboné, en particulier en bitume, est comprise entre 3,5 et 12% en poids.

3/ Sable fillérisé activé selon l'une des revendications 1 et 2, caractérisé par le profil granulométrique suivant :

| Dimension des mailles du tamis en millimètres | Proportion des éléments du sable fillérisé activé passant au tamis correspondant, en % |
|---|---|
| 6,3 | 100 |
| 4 | 80 à 100 |
| 2 | 60 à 100 |
| 1 | 45 à 90 |
| 0,63 | 35 à 85 |
| 0,315 | 25 à 65 |
| 0,2 | 20 à 55 |
| 0,080 | 15 à 45 |

4/ Sable fillérisé activé selon l'une des revendications 1 à 3, caractérisé en ce que l'épaisseur moyenne du film de liant hydrocarboné, qui enrobe les particules de sable, est de l'ordre de 3,5 µm.

5/ Sable fillérisé activé selon l'une des revendications 1 à 4, caractérisé par une teneur en eau inférieure à environ 1,5% en poids.

6/ Procédé de préparation de sable fillérisé activé selon l'une des revendications 1 à 5, se présentant sous la forme de particules entièrement enrobées d'un film de liant hydrocarboné, en particulier de bitume, conférant audit sable un caractère hydrophobe, caractérisé en ce qu'il consiste à broyer des enrobés de récupération éventuellement réduits préalablement en éléments de dimension maximale d'environ 30 mm par fraisage ou par émiettage de blocs, jusqu'à obtention d'une proportion de 15 à 45% en poids, de préférence de 20 à 35% en poids, de particules inférieures à environ 80 µm.

7/ Procédé selon la revendication 6, caractérisé en ce que le broyage des enrobés préalablement réduits est réalisé dans un broyeur à barres ou un broyeur giratoire.

8/ Procédé selon l'une des revendications 6 et 7, caractérisé en ce que le broyage des enrobés préalablement réduits est réalisé en présence d'un agent de mouture.

9/ Application du sable fillérisé activé, selon l'une des revendications 1 à 5, à la fabrication d'enrobés pour travaux routiers ou autres revêtements analogues.

10/ Application selon la revendication 9, caractérisée en ce que le sable fillérisé est ajouté à un mélange de granulats et de bitume d'apport pur, spécial ou modifié, et éventuellement d'huile régénérante.

11/ Application selon la revendication 10, caractérisée en ce que le sable fillérisé activé est ajouté à raison d'environ 10 à 40% en poids par rapport au poids de l'ensemble des granulats.

12/ Application selon l'une des revendications 10 et 11, caractérisée en ce que le liant bitumineux d'apport est ajouté à raison d'environ 2 à 3,5% en poids par rapport au poids de l'ensemble des granulats.

**Claims**

1. An activated sand with added filler for hot mixes, characterized in that it takes the form of particles completely coated with a film binder made up with tar, more particularly bitumen, conferring a hydrophobic character on the sand, the particles being obtained from reclaimed surfacings, by crushing until a proportion of 15 to 45% by weight, preferably 20 to 35% by weight, of particles smaller than about 80 µm is obtained.

2. An activated sand with added filler according to Claim 1, characterized in that its content of binder made up with tar, more particularly bitumen, is between 3.5 and 12% by weight.

3. An activated sand with added filler according to either of Claims 1 and 2, characterized by the following grain size profile:

| Mesh size of sieve in mm | Proportion of elements in activated sand with added filler passing through corresponding sieve in % |
|---|---|
| 6.3 | 100 |
| 4 | 80 to 100 |
| 2 | 60 to 100 |
| 1 | 45 to 90 |
| 0.63 | 35 to 85 |
| 0.315 | 25 to 65 |
| 0.2 | 20 to 55 |
| 0.080 | 15 to 45 |

4. An activated sand with added filler according to one of Claims 1 to 3, characterized in that the mean thickness of the film of binder made up with tar which coats the sand particles is of the order of 3.5 μm.

5. An activated sand with added filler according to one of Claims 1 to 4, characterized by a water content lower than about 1.5% by weight.

6. A process for the preparation of activated sand with added filler according to one of Claims 1 to 5, takes the form of particles completely coated with a film binder made up with tar, more particularly bitumen, conferring a hydrophobic character on the sand, characterized in that it consists in crushing reclaimed surfacings, possibly previously reduced to elements of approximately 30 mm maximum size by the milling or crumbling of blocks, until a proportion of 15 to 45% by weight, preferably 20 to 35% by weight, of particles smaller than approximately 80 μm is obtained.

7. A process according to Claim 6, characterized in that the previously reduced surfacings are crushed in a rod mill or a rotary crusher.

8. A process according to one of Claims 6 and 7, characterized in that the previously reduced surfacings are crushed in the presence of a comminution agent.

9. Application of the activated sand with added filler according to one of Claims 1 to 5 to the production of hot mixes for road works or other similar coatings.

10. Application according to Claim 9, characterized in that the sand with added filler is added to a mixture of granulates and special or modified pure make-up bitumen and possibly regenerating oil.

11. Application according to Claim 10, characterized in that the activated sand with added filler is added at the rate of about 10 to 40% by weight with respect to the weight of the whole of the granulates.

12. Application according to one of Claims 10 and 11, characterized in that the bituminous make-up binder is added at the rate of about 2 to 3.5% by weight with respect to the weight of the whole of the granulates.

## Patentansprüche

1. Aktivierter Füller-Sand für Heiß-Mischgut bzw. Heißeinbaudecken, dadurch gekennzeichnet, daß er in Form von Teilchen vorliegt, die vollständig von einem Film aus einem Kohlenwasserstoff-Binder, insbesondere Bitumen, umgeben sind, der dem Sand einen hydrophoben Charakter verleiht, wobei die Teilchen erhalten worden sind, ausgehend von wiedergewonnenen Straßenbelägen, durch Vermahlen, bis man einen Anteil von 15 bis 45 Gew.-%, vorzugsweise 20 bis 35 Gew.-%, Teilchen mit einem Durchmesser kleiner etwa 80 μm erhält.

2. Aktivierter Füller-Sand nach Anspruch 1, dadurch gekennzeichnet, daß sein Gehalt an Kohlenwasserstoff-Binder, insbesondere an Bitumen, zwischen 3,5 und 12 Gew.-% liegt.

3. Aktivierter Füller-Sand nach einem der Ansprüche 1 oder 2, gekennzeichnet durch die folgende Korngrößenverteilung:

| Maschengröße des Siebs in mm | Anteil des aktivierten Füller-Sandes, der durch das entsprechende Sieb hindurchgeht in % |
|---|---|
| 6,3 | 100 |
| 4 | 80 bis 100 |
| 2 | 60 bis 100 |
| 1 | 45 bis 90 |
| 0,63 | 35 bis 85 |
| 0,315 | 25 bis 65 |
| 0,2 | 20 bis 55 |
| 0,080 | 15 bis 45 |

4. Aktivierter Füller-Sand nach einem der Ansprüche 1 bis 3, dadurch gekennzeichnet, daß die mittlere Dicke des Films aus Kohlenwasserstoff-Binder, der die Sandteilchen umhüllt, in der Größenordnung von 3,5 µm liegt.

5. Aktivierter Füller-Sand nach einem der Ansprüche 1 bis 4, dadurch gekennzeichnet, daß der Wassergehalt unter etwa 1, 5 Gew.-% liegt.

6. Verfahren zur Herstellung von aktivierten Füller-Sand nach einem der Ansprüche 1 bis 5, der in Form von Teilchen vorliegt, die vollständig von einem Film aus einem Kohlenwasserstoff-Binder, insbesondere Bitumen, umgeben sind, der dem Sand einen hydrophoben Charakter verleiht, dadurch gekennzeichnet, daß es darin besteht, daß man wiederzuverwendende Straßenbeläge fein mahlt, die gegebenenfalls vorher zu Teilen mit einer Größe von maximal etwa 30 mm zerkleinert worden sind durch Zersägen oder Zerbröckeln von Blöcken, bis man einen Anteil von 15 bis 45 Gew.-%, vorzugsweise von 20 bis 35 Gew.-%, von Teilchen unter etwa 80 µm erhält.

7. Verfahren nach Anspruch 6, dadurch gekennzeichnet, daß das Vermahlen der vorher zerkleinerten Straßenbeläge in einer Schlagmühle oder einem Kreiselbrecher durchgeführt wird.

8. Verfahren nach einem der Ansprüche 6 oder 7, dadurch gekennzeichnet, daß das Vermahlen der vorher zerkleinerten Straßenbeläge in Gegenwart eines Mahlhilfsmittels durchgeführt wird.

9. Anwendung des aktivierten Füller-Sandes nach einem der Ansprüche 1 bis 5 zur Herstellung von Belägen bei Straßenbauarbeiten oder anderen entsprechenden Belägen.

10. Anwendung nach Anspruch 9, dadurch gekennzeichnet, daß der aktivierte Füller-Sand zugesetzt wird zu einem Gemisch aus Granulat und Bitumen in reiner, spezieller oder modifizierter Form und gegebenenfalls regeneriertem Öl.

11. Anwendung nach Anspruch 10, dadurch gekennzeichnet, daß der aktivierte Füller-Sand im Verhältnis von 10 bis 40 Gew.-%, bezogen auf das Gewicht des gesamten Granulats, zugesetzt wird.

12. Anwendung nach einem der Ansprüche 10 oder 11, dadurch gekennzeichnet, daß der bituminöse Binder zugesetzt wird in einer Menge von etwa 2 bis 3,5 Gew.-%, bezogen auf das Gewicht des gesamten Granulats.